# EUROPÄISCHE PATENTSCHRIFT

(11) **EP 0 942 035 B1**
(45) Veröffentlichungstag und Bekanntmachung des Hinweises auf die Patenterteilung: **02.05.2003**
(21) Anmeldenummer: 99250046.2
(22) Anmeldetag: 16.02.1999
(51) Int. Cl.: C08J 11/24, C08J 11/14, C07C 51/09

(54) **Verfahren und Vorrichtung zur Rückgewinnung von linearem Polyester**
Process and apparatus for recycling of linear polyester
Procédé et dispositif pour la récupération de polyester linéaire

(30) Priorität: 12.03.1998 DE 19811280
(43) Veröffentlichungstag der Anmeldung: 15.09.1999
(73) Patentinhaber: Inventa-Fischer GmbH, 13509 Berlin (DE)
(72) Erfinder: Gerking, Lüder, Dr., 14195 Berlin (DE); Hagen, Rainer, Dr., 13465 Berlin (DE); Taurat, Dieter Otto, 13407 Berlin (DE)
(74) Vertreter: Pfenning, Meinig & Partner

(56) Entgegenhaltungen:
- DD-A- 130 256
- GB-A- 1 500 577
- PATENT ABSTRACTS OF JAPAN vol. 1996, no. - , 31. Mai 1996 (1996-05-31) & JP 08 011188 A (TEIJIN LTD), 16. Januar 1996 (1996-01-16)

## Beschreibung

Die Erfindung betrifft ein Verfahren zur Rückgewinnung von linearem Polyester, wie PET und PBT, aus dessen Abfällen und eine Vorrichtung zur Durchführung des Verfahrens.

Im Unterschied zu vielen anderen schmelzbaren thermoplastischen Kunststoffen wie Polyethylen, Polypropylen oder Polystyrol lassen sich lineare Polyester wie Polyethylentherephthalat nicht durch einfaches Aufschmelzen und Regranulieren zu einem wiederverwendbaren Rohstoff für höhere Qualitätsansprüche verarbeiten, weil Polyester durch die immer anhaftende Feuchtigkeit beim Aufschmelzen hydrolytisch zersetzt werden, wenn sie nicht zuvor getrocknet wurden. Andererseits ist der Abbau der Polymerketten durch Hydrolyse bei Polyestern umkehrbar, indem durch geeignete Reaktionsbedingungen wie Vakuum, hohe Temperatur und Rühren polykondensiert und das gebildete Reaktionswasser entzogen wird. Im Gegensatz zu den anderen genannten Kunststoffen ist bei Polyestern auch der durch thermischen oder oxidativen Abbau hervorgerufene Abbau der Molekülketten reparierbar.

Polyethylentherephthalat (PET) als Abfall zeichnet sich häufig durch eine gegenüber unversehrtem PET erhöhte Carboxylendgruppenkonzentration und eine Verarmung an Glykolesterendgruppen aus. Die Ursache dafür ist in erster Linie der thermische Abbau, der beim Aufschmelzen und bei der Verarbeitung aus der Schmelze unvermeidlich ist. Dies führt dazu, daß bei üblichen Regranulierprozessen die Kettenlänge des PET, gemessen durch die intrinsische Lösungsviskosität (i.v.), abnimmt, wird das Verhalten des PET bei mehrfachem Regranulieren und Wiederverwenden betrachtet, wie es bei intensivem Recycling zu erwarten ist, so kann festgestellt werden, daß etwa nach dem dritten Regranulieren die intrinsische Lösungsviskosität soweit gesunken ist, daß das Material unbrauchbar ist. Die intrinsische Lösungsviskosität kann durch Festphasennachkondensation des PET wieder angehoben werden, wobei diese Maßnahme jedoch auf Grenzen stößt, da inzwischen die Carboxylendgruppen zu- und die Glykolesterendgruppen abgenommen haben. Je größer das Verhältnis COOH/OH ist, desto niedriger wird die durch Nachkondensation erreichbare intrinsische Lösungsviskosität und desto höher wird die COOH-Konzentration des Nachkondensationsproduktes.

Es sind Verfahren zum Rezyklieren von PET bekannt, bei denen der regellose Abfall derart zerkleinert und kompaktiert wird, daß die so bearbeiteten Abfallteile stetig durch Schacht- oder andere Trockner geführt werden können, um eine vollständige Trocknung der Teile zu erzielen. Anschließend wird das Aufschmelzen und die Nachkondensation durchgeführt. Dieses Verfahren hat den Nachteil, daß die Trocknung des Abfalls aufgrund des Anlagenumfanges und des Energieverbrauchs sehr aufwendig ist und der hydrolytische Abbau auch bei noch so sorgfältigem Trocknen des Abfalls nicht vollständig vermieden werden kann.

Bei diesen Verfahren ist der erreichbare Polykondensationsgrad im Endprodukt abhängig von der Qualität des als Rohstoff verwendeten Polyesterabfalls, insbesondere von dessen intrinsischer Lösungsviskosität (i.v.) und dessen COOH-Konzentration. Dem Endprodukt aus diesem Verfahren sind deshalb viele Verwendungszwecke, die einen bestimmten Polykondensationsgrad erfordern, verschlossen. Solche Produkte müssen deshalb als minderwertig bezeichnet werden.

Diese Verfahren sind außerdem nicht in der Lage, den von Mal zu Mal zunehmenden Verlust an Glykolesterendgruppen auszugleichen, der bei mehrmaligem Rezyklieren von Polyester, insbesondere im nahezu geschlossenen Kreislauf unvermeidlich ist.

DD 130 256 A betrifft ein Verfahren zur kontinuierlichen Herstellung von Schmelzklebstoffen aus Polyesterabfällen durch modifizierende Alkoholyse, bei dem kontinuierlich 5 bis 30 Gew.% bezogen auf den eingesetzten Polyester einer Kombination von Di- und Triolen unter einem bestimmten Druck direkt zu der reaktionsfähigen schmelzflüssigen Phase des Polyäthylenterephthalatabfalls zugegeben werden. Anschließend wird die polykondensation kontinuierlich unter vermindertem Druck durchgeführt.

Der Erfindung liegt die Aufgabe zugrunde, ein Verfahren und eine Vorrichtung zur Rückgewinnung von linearem Polyester mit gleichzeitig hydrolytischem und glykolytischem Abbau zu schaffen, mit dem ein rezykliertes Polyester hoher Qualität erhalten werden soll und damit ein Rezyklieren auch im geschlossenen Kreislauf möglich wird, wobei der Anlagenumfang und der Energieverbrauch geringgehalten werden sollen. Insbesondere ist es Aufgabe der Erfindung, einen Polyester mit genau dem Polykondensationsgrad zu erzeugen, der für die jeweilige Anwendung erforderlich ist, unabhängig von der Qualität (i.v., Carboxylendgruppenkonzentration) des Roh-Polyesters.

Diese Aufgabe wird erfindungsgemäß durch die Merkmale des Hauptanspruchs und des Nebenanspruchs gelöst.

Entsprechend der vorliegenden Erfindung werden ungetrocknete Abfälle einem Extruder zugeführt, indem diese geschmolzen werden, wobei es in der Schmelze zu dem hydrolytischen Abbau kommt. Die Abfälle brauchen nur soweit vorzerkleinert zu werden, daß sie die Eintrittsöffnung der dem Extruder vorgeschalteten Shreddereinrichtung störungsfrei passieren können. Der Schmelze wird Diol, zum Beispiel Ethylenglykol, entsprechend dem Grundbaustein für das zu behandelnde Polymer, zum Beispiel PET zugesetzt, worauf die Schmelze in einem Reaktor, ähnlich den Endreaktoren in kontinuierlichen Polyester-Polykondensationsanlagen auf den für die Verarbeitung gewünschten Polykondensationsgrad nachkondensiert wird. Es wird somit der hydrolytische Abbau des Polyesters in Kauf genommen und Zusätze von Diol in dem stöchiometrisch erforderlichen Maße hinzugefügt, um in einer Schmelzenachkondensation den gewünschten Polyester mit wieder angehobenem Molekulargewicht zu erhalten. Die durch das Hinzufügen von Diol, zum Beispiel Ethylenglykol bewirkte partielle Glykolyse des Polymers, zum Beispiel PET, senkt das Verhältnis der COOH/OH-Endgruppenkonzentration, so daß in der folgenden Schmelzenachkondensation die gewünschte intrinsische Lösungsviskosität ohne Einschränkung zu erreichen ist. Aufgrund der gezielten Steuerung und Temperatur des Abbaus im Polymerisationsgrad zusammen mit dem glykolytischen Abbau auf Grenzwerte zwischen 15 und 35 kann eine Anpassung an die gewünschten Parameter des Endprodukts vorgenommen werden.

Das Diol wird so dosiert, daß das Verhältnis der Endgruppen COOH/OH am Eintritt des Nachkondensationsreaktors zwischen 0,3 und 0,1 liegt, wodurch eine Optimierung der Verfahrensbedingungen vorgenommen werden kann.

Damit ist das Endprodukt für die üblichen Anwendungen wie Fasern, Folien und Flaschen verwendbar und vergleichbar zu einem aus den ursprünglichen Monomeren hergestellten Polyester.

Durch die in den Unteransprüchen angegebenen Maßnahmen sind vorteilhafte Weiterbildungen und Verbesserungen möglich.

In vorteilhafter Weise wird die Schmelze vor und/oder nach der Zudosierung von Diol gefiltert, da die Schmelze zu dem Zeitpunkt die niedrigste Molmasse und damit die niedrigste Viskosität hat, wodurch der Aufwand an Filterdruck und Filterfläche geringer ist, d.h. die Energie- und Apparatekosten verringert werden können.

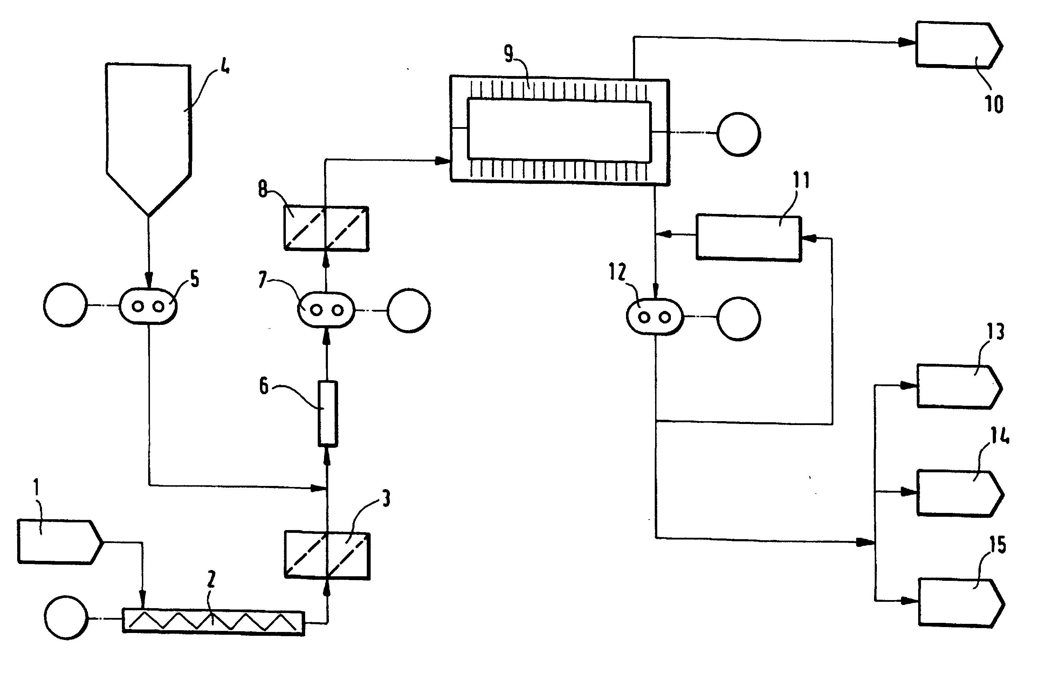

Ein Ausführungsbeispiel der erfindungsgemäßen Vorrichtung ist in der Zeichnung dargestellt und wird in der nachfolgenden Beschreibung zusammen mit dem Verfahren näher erläutert. Die einzige Figur zeigt einen schematischen Aufbau der erfindungsgemäßen Vorrichtung.

Das erfindungsgemäße Verfahren zur Rückgewinnung von linearen Polyestern, zum Beispiel PET, kann für sortenreine Abfälle der unterschiedlichsten Form verwendet werden, d.h. die Abfälle können in Form von Flaschenschrott, Fasern und Fäden, Folien und Vliesen mit Randstreifen oder ganze Flächenbahnen sowie als Schmelzeklumpen vorliegen. Verschmutzter Abfall kann vor der Bearbeitung gewaschen werden und größere Polymerstücke können grob vorzerkleinert werden. Als Rohstoff eignen sich auch grob vorzerkleinerte Getränkeflaschen aus PET, die durch Sortierung von Fremdstoffen und anderen Polymeren und durch Waschen mit Wasser von Papier und Klebstoffresten befreit sind. Das von der Wäsche her oberflächlich anhaftende Wasser kann in einfachen Trocknern entfernt werden, ohne daß die Trocknung so weit geht, daß Feuchtigkeit aus dem Inneren des Polymers diffundiert.

Die in der Figur dargestellte Anlage weist als wesentliche Bestandteile einen Einschneckenentgasungsextruder 2 mit einer vorgeschalteten Shreddervorrichtung 1 auf, der über ein Transportband der vorzerkleinerte Abfall zugeführt wird. Die Shreddervorrichtung besteht dabei vorzugsweise aus einer in einem Gehäuse aufgenommenen drehbaren Scheibe, auf deren Oberfläche hochstehende Schneiden quer angeordnet sind. Die vorzerkleinerten Abfallteile werden darin homogenisiert, aufgewärmt und kompaktiert, wobei aufgrund der Drehung der Scheibe gleichzeitig die für eine tangentiale Beschickung der Extruderschnecke notwendige Zentrifugalkraft erzeugt wird. Dem Extruder 1, in dem das Abfallmaterial aufgeschmolzen wird, ist eine Filtereinheit 3 mit einer Maschenweite zwischen 40 und 150 µm nachgeschaltet. Die aus der Filtereinheit 3 austretende Schmelze passiert einen speziellen statischen Mischer 6 und dann eine Zumeßpumpeneinheit 7, die die Schmelze über eine weitere Filtereinheit 8 mit einer Maschenweite zwischen 20 und 30 µm in den Nachkondensationsreaktor 9 leitet.

Eine Dosierpumpe 5 mit einstellbarem Antriebssystem dosiert aus einem Reservoir 4 Ethylenglykol und Reaktionsadditiva in den Schmelzestrom zum statischen Mischer 6 ein.

Der Reaktor 8 ist als horizontaler Zylinder ausgebildet, in dem ein mit Scheiben und/oder Speichen bestückter Rotor angeordnet ist. Das für die Reaktion im Endreaktor notwendige Vakuum wird über ein Sprühkondensatoren und Pumpen enthaltendes Vakuumsystem 10 erzeugt. Eine Auslaßpumpe 12 transportiert die nachkondensierte Schmelze zu der Weiterverarbeitungsstelle, an der ein Granulator 13 und/oder eine Spinnvorrichtung 14 und/oder eine sonstige Behandlungsvorrichtung 15, zum Beispiel eine Gießvorrichtung, vorgesehen ist.

Die vorzerkleinerten und kompaktierten ungetrockneten Abfälle werden in den Extruder 2 geliefert, in dem die Abfälle aufgeschmolzen werden, wobei es in der Schmelze zu einem hydrolytischen Abbau kommt. Dieser Abbau wird über die Verfahrensbedingungen und - vorgaben gezielt durchgeführt. Diese betreffen den Feuchtigkeitsgrad der Abfälle und/oder die Temperatur und/oder die Höhe des Vakuums im Extruder 2. Da der Extruder 2 ein Entgasungsextruder ist, können die während des Aufschmelzens austretenden flüchtigen Verunreinigungen abgezogen werden. Bei dem hydrolytischen Abbau verringert die Schmelze ihr Molekulargewicht, d.h. der Polymerisationsgrad nimmt ab, wodurch die Schmelze weniger viskos wird und so mit geringem Aufwand an Druck oder Filterfläche in der Filtereinheit 3 mit einer Filterstärke von 40 bis 150 µm grob gefiltert werden kann.

Ethylenglykol und andere Additiva wie optische Aufheller, Farbstoffe, Farbpigmente, Stabilisatoren, Katalysatoren werden über die Dosierpumpe 5 der Schmelze zugesetzt, wobei in dem statischen Mischer 6 eine gute Durchmischung stattfindet. Anschließend wird nach der Zumessung der Schmelze für den Reaktor 9 diese fein gefiltert (Filtereinheit 8). Durch das Zusetzen von Ethylenglykol tritt zusätzlich ein glykolytischer Abbau auf. Der kombinierte hydrolytische und glykolytische Abbau wird, gesteuert über die Verfahrensbedingungen und -vorgaben im Extruder und über die zudosierte Menge an Ethylenglykol, in einem durch eine untere und eine obere Grenze vorgegebenen Bereich durchgeführt, wobei die untere Grenze für den Polymerisationsgrad 15 ist, da unterhalb dieses Wertes der Nachkondensations- oder Endreaktor 9 nicht mehr sinnvoll einzusetzen ist. Die obere Grenze des Polymerisationsgrades liegt etwa bei 35, vorzugsweise 30, da anderenfalls der Vorteil der günstigen Filtrierung wegfallen würde.

Weiterhin soll am Eingang des Nachkondensationsreaktors 9 ein gewünschter Zustand der Carboxylendgruppen COOH und der Hydroxydgruppen OH vorliegen. Das Verhältnis der Endgruppen COOH/OH soll am Eintritt des Endreaktors 8 zwischen 0,3 und 0,1 liegen. Vorzugsweise ist vor dem Endreaktor 9 ein nicht dargestelltes Schmelzeviskosimeter vorgesehen, das die Viskosität mißt, wobei abhängig von dem Meßergebnis die Zugabe des Ethylenglykols und/oder die übrigen Verfahrensparameter gesteuert werden.

In dem Nachkondensationsreaktor 8 wird ein Endpolymerisationsgrad von ungefähr 105 erreicht, indem ein Vakuum zwischen 3 hPa und 1hPa und Temperaturen zwischen 285°C und 290°C vorgesehen werden, innerhalb des Endreaktors 9 wird das endgültige Molekulargewicht dadurch eingestellt, daß die Schmelze dem Vakuum bei Bildung großer Oberflächen ausgesetzt wird, wodurch das Ethylenglykol leicht aus dem Produkt mit sich erhöhender Viskosität verdampft. Die Schmelze wird durch den Nachkondensationsreaktor 9 durch die Neigung der Scheiben auf dem Rotor transportiert und die Verweilzeit wird durch die Drehgeschwindigkeit und den Pegel eingestellt. Die Reaktionsbedingungen werden abhängig von den Meßergebnissen der Viskosität durch das Viskosimeter 12 gesteuert.

Am Ende des Reaktors verläßt die Schmelze den Reaktor 9 über eine Auslaßleitung, die mit der Pumpe 12 verbunden ist. Sie kann in der Spinnvorrichtung 14 zu Fäden oder in der Gießvorrichtung 15 zu Folien weiterverarbeitet oder einer Granuliereinheit 13 zugeführt werden.

In einer besonderen Ausführungsform des Nachkondensationsreaktors 8 kann ein Endpolymerisationsgrad zwischen etwa 150 und etwa 200 eingestellt werden. Dies wird erreicht durch ein Vakuum zwischen 0,5 und 1,0 hPa, wobei der Rotor des Reaktors mit größerer Materialstärke ausgeführt ist, so daß er den bei hoher Schmelzeviskosität auftretenden Kräften standhält. Ein Polymerisationsgrad (DP) von ca. 150 läßt die Herstellung von PET-Flaschen zu, während sich das Produkt mit ca. DP 200 zur Herstellung von technischen Fäden mit hoher Festigkeit, hohem Modul und niedrigem Schrumpf eignet. Sowohl Flaschen als auch technische Fäden können aus dem granulierten Polyester durch Wiederaufschmelzen im Extruder und anschließendes Spritzgießen der Flaschen-Vorformlinge bzw. Spinnen der Fäden erzeugt werden. Besonders wirtschaftlich ist jedoch die direkte Verarbeitung der Schmelze aus dem Endreaktor zu Vorformlingen oder Fäden, ohne die Schmelze dazwischen zu Granulat zu verarbeiten. Dieser letzte Weg, der für Polyester-Neuware bekannt ist, wird durch das erfindungsgemäße Verfahren auch für rezyklierten Polyester zugänglich.

### Beispiel 1

Das Rohmaterial in Form von grob zerkleinerten, sauberen und sortenreinen Polyesterabfällen wird mit einem Durchsatz von 1300 kg/h in den Extruder eingespeist und dort aufgeschmolzen.

Aus der Entgasungszone des Extruders werden die Brüden bei einem Druck von 200 mbar abgezogen.

Die elektrische Heizung des Extruders wird so eingestellt, daß die austretende Schmelze eine Temperatur von 285°C hat.

Die Schmelze mit einer Viskosität von 20 bis 100 Pas wird durch automatische Rückspülfilter mit einer Porenweite von 130 µm gefiltert. Alle Schmelzeleitungen sind mit einer Temperatur von 290°C beheizt.

In einer besonders gestalteten Mischstrecke werden anschließend 20 kg/h vorgewärmtes Glykol zudosiert und mit der Schmelze intensiv gemischt. Mittels einer geregelten Zahnradpumpe wird die Schmelze in genauer Menge über ein Wechselfilter mit einer Porenweite von 25 µm nochmals gefiltert und dem Reaktor zugeführt.

Der Scheibenreaktor hat eine Länge von 4,0 m, einen Durchmesser von 1,8 m und ist mit insgesamt 21 Scheiben unterschiedlicher Lochung und Gestalt ausgestattet. Die Scheiben werden mit einer Drehzahl von 1,5 min⁻¹ angetrieben. Im Reaktor wird das Niveau der Schmelze gemessen und konstant gehalten. Die Temperatur des Reaktors beträgt 288°C und der Druck wird um einen Mittelwert von 1,0 mbar geregelt über die Viskosität des Endprodukts.

Das Brüdengemisch aus 17,1 kg/h EG (Ethylenglykol), 1,6 kg/h Wasser, 0,12 kg/h DEG (Diethylenglykol) und Oligomere wird kondensiert und einer Wiederaufarbeitung zugeführt.

Die Schmelze wird aus dem Reaktor mit einer speziellen Weitmaulzahnradpumpe bei konstanter Drehzahl abgezogen und über ein Schmelzeviskosimeter in die Weiterverarbeitung gedrückt, die Temperatur beträgt 286°C, der Druck 150 bar, die Viskosität 260 Pas.

### Beispiel 2

In einer Pilotanlage werden 25 kg/h PET-Granulat einer intrinsischen Viskosität (i.V.) von 0,636 dl/g und Carboxylendgruppen von > 33 mmol/kg in einem Extruder bei Temperaturen von 270-290°C geschmolzen. Anschließend wird der Polymerstrom mit 190 g/h Ethylenglykol gemischt und dem Endreaktor zugeführt. Der Endreaktor hat einen Durchmesser von 0,6 m und eine Länge von 1,2 m. bei einer Schmelzetemperatur von ca. 285°C, einem Vakuum von ca. 3 mbar und einer Rotordrehzahl von 0,5 min⁻¹ werden Lösungsviskositäten im Produkt von i.v. = 0,65 dl/g erlangt. Die Carboxylendgruppen liegen dabei unterhalb von 25 mmol/kg. Das flüssige Polymer wird in Strängen verfestigt und granuliert.

Das derart erzeugte PET-Granulat mit i.v. = 0,65 dl/g wird in einer Spinnvliesanlage in einem Extruder erneut geschmolzen. Der Polymerdurchsatz beträgt ca. 42 kg/h. Das flüssige Polymer wird mittels Zahnradpumpe Düsen mit Lochdurchmessern von 0,4 mm zugeführt und mit Filamentgeschwindigkeiten von 4000 m/min zu Spinnvlies verarbeitet. Der Titer liegt bei 3 dtex, das Flächengewicht bei 30 g/m². das Vlies ist 660 mm breit.

## Patentansprüche

1. Verfahren zur Rückgewinnung von linearen Polyestern, wie PET und PBT, aus Polyesterabfällen unterschiedlichster Form in kontinuierlicher Weise, bei dem ungetrockneter oder nicht durchgetrockneter Abfall aufgeschmolzen wird, wobei die Polymerketten durch anhaftende Feuchte hydrolytisch abgebaut werden, und bei dem der Schmelze das dem Grundbaustein des Polymers entsprechende Diol mit der Folge eines glykolytischen Abbaus beigefügt wird und die so behandelte Schmelze auf den gewünschten Polymerisationsgrad nachkondensiert wird, wobei das Diol in einer solchen Menge der Schmelze zudosiert wird, daß das Verhältnis der COOH/OH-Endgruppenkonzentration der Schmelze vor der Nachkondensation zwischen 0,3 und 0,1 liegt und wobei der kombinierte hydrolytische und glykolytische Abbau im Polymerisationsgrad vor der Nachkondensation auf Werte zwischen einer unteren Grenze von 15 und einer oberen Grenze von 35 gesteuert wird.

2. Verfahren nach Anspruch 1, **dadurch gekennzeichnet, daß** die Schmelze vor und/oder nach der Zudosierung des Diols gefiltert wird.

3. Verfahren nach Anspruche 1 oder 2, **dadurch gekennzeichnet, daß** eine grobe Filtrierung mit einer Filtergröße von 40 bis 150 µm vor dem Zudosieren von Diol und eine feine Filtrierung mit einer Filtergröße von 20 bis 30 µm vor der Nachkondensation durchgeführt werden.

4. Verfahren nach einem der Ansprüche 1 bis 3, **dadurch gekennzeichnet, daß** die Polymerabfälle vor dem Aufschmelzen grob vorzerkleinert und/oder kompaktiert werden.

5. Verfahren nach einem der Ansprüche 1 bis 4, **dadurch gekennzeichnet, daß** die Abfälle vor dem Aufschmelzen gewaschen werden.

6. Verfahren nach einem der Ansprüche 1 bis 5, **dadurch gekennzeichnet, daß** sortenreine Abfälle unterschiedlichster Herkunft vermischt verarbeitet werden.

7. Verfahren nach einem der Ansprüch 1 bis 6, **dadurch gekennzeichnet, daß** der Schmelze Additiva, wie optische Aufheller, Farbstoffe, Farbpigmente, Stabilisatoren oder Katalysatoren zugesetzt werden.

8. Verfahren nach Anspruch 7, **dadurch gekennzeichnet, daß** die Additiva mit dem Diol zugesetzt und die Bestandteile homogen mit der Schmelze durchmischt werden.

9. Verfahren nach Anspruch 7, **dadurch gekennzeichnet, daß** die Additiva insgesamt oder teilweise beim Aufschmelzen der Abfälle zugesetzt werden.

10. Verfahren nach einem der Ansprüche 1 bis 9, **dadurch gekennzeichnet, daß** die Viskosität der Schmelze vor der Nachkondensation gemessen wird und daß abhängig vom Meßergebnis die Zudosierung des Diols und/oder Temperatur und/oder Vakuum beim Aufschmelzen gesteuert werden.

11. Vorrichtung zur Rückgewinnung von linearen Polyestern, wie PET und PBT, aus Polyesterabfällen unterschiedlichster Form mit einem Entgasungsextruder (2) zum Aufschmelzen der Abfälle und Abziehen von flüchtigen Bestandteilen, einer ersten Filtereinheit (3) zum Filtern der Schmelze, einer Dosiereinheit (5) zum Zudosieren von Diol und gegebenenfalls Additiva in die Schmelze, einem statischen Mischer (6) zum Mischen und Homogenisieren der Schmelze, einem horizontal angeordneten Nachkondensationsreaktor (9) zum Nachkondensieren der Schmelze auf einen gewünschten Polymerisationsgrad und einer Pumpe (12) zum Abziehen und Fördern der Schmelze zur Weiterverarbeitung.

12. Vorrichtung nach Anspruch 11, **dadurch gekennzeichnet, daß** dem Entgasungsextruder (2) eine Vorrichtung (1) zum Zerkleinern, Homogenisieren und Kompaktieren der Abfälle vorgeschaltet ist, die gleichzeitig die notwendige Kraft zum Beschicken des Extruders erzeugt.

13. Vorrichtung nach Anspruch 11 oder 12, **dadurch gekennzeichnet, daß** eine zweite Filtereinheit (8) vor dem Nachkondensationsreaktor (9) vorgesehen ist.

14. Vorrichtung nach einem der Ansprüche 11 bis 13, **dadurch gekennzeichnet, daß** die erste Filtereinheit (3) eine Filtriergröße von 40 bis 150 µm und die zweite eine Filtriergröße von 20 bis 30 µm aufweisen.

15. Vorrichtung nach einem der Ansprüche 11 bis 14, **dadurch gekennzeichnet, daß** eine Zumeßeinheit (7) zum Zumessen der Schmelze in den Nachkondensationsreaktor (9) dem statischen Mischer (6) nachgeschaltet ist.

16. Vorrichtung nach einem der Ansprüche 11 bis 15, **dadurch gekennzeichnet, daß** vor dem Nachkondensationsreaktor (9) ein Viskosimeter zum Messen der intrinsischen Viskosität der Schmelze angeordnet ist, wobei abhängig von den Meßergebnissen die Dosiereinheit (5) zum Zudosieren des Diols und/oder das Vakuum des Entgasungsextruders (2) gesteuert wird.

17. Vorrichtung nach einem der Ansprüche 11 bis 16, **dadurch gekennzeichnet, daß** der Nachkondensationsreaktor (9) als Scheibenreaktor mit einem Rotor, der auf einem durchbrochenen Hohlzylinder schräg angestellte Scheiben trägt, ausgebildet ist.

18. Vorrichtung nach einem der Ansprüche 11 bis 17, **dadurch gekennzeichnet, daß** dem Nachkondensationsreaktor (9) ein Viskosimeter (11) zum Messen der intrinsischen Viskosität der aus dem Reaktor (9) austretenden Schmelze nachgeschaltet ist, wobei abhängig von den Meßwerten die Verweilzeit der Schmelze im Reaktor (9) bzw. Drehgeschwindigkeit des Rotors und/oder das Vakuum im Reaktor (9) gesteuert werden.

## Claims

1. Method for recovering linear polyesters, such as PET and PBT, from polyester waste of the most varied form, in a continuous manner, in which undried or not dried-through waste is melted, the polymer chains being hydrolytically degraded by adhering moisture, and in which diol, corresponding to the basic constitutional unit of the polymer, is added to the melt resulting in glycolytic degradation, and the melt so treated is further condensed to the desired degree of polymerization,
the diol being added to the melt in such an amount that the ratio of the concentration of COOH/OH terminal groups of the melt before the postcondensation lies between 0.3 and 0.1 and the combined hydrolytic and glycolytic degradation in the degree of polymerization before the postcondensation being controlled to values between a lower limit of 15 and an upper limit of 35.

2. Method according to claim 1, **characterised in that** the melt is filtered before and/or after the metered addition of the diol.

3. Method according to claim 1 or claim 2, **characterised in that** coarse filtration is carried out with. a filter size of between 40 and 150 gm before the metered addition of diol and fine filtration with a filter size of between 20 and 30 gm before the postcondensation.

4. Method according to one of claims 1 to 3, **characterised in that** the polymer waste is coarsely precrushed and/or compacted before the melting.

5. Method according to one of claims 1 to 4, **characterised in that** the waste is washed before the melting.

6. Method according to one of claims 1 to 5, **characterised in that** the carefully sorted waste of the most varied origin is processed mixed.

7. Method according to one of claims 1 to 5, **characterised in that** additives such as optical brighteners, colouring agents, colour pigments, stabilizers or catalysts are added to the melt.

8. Method according to claim 7, **characterised in that** the additives are added with the diol and the constituents are homogeneously intermixed with the melt.

9. Method according to claim 7, **characterised in that** the additives are mixed in their entirety or partially during the melting of the waste.

10. Method according to one of claims 1 to 9, **characterised in that** the viscosity of the melt is measured before the post condensation and that the metered addition of the diol and/or the temperature and/or the vacuum during melting are controlled in dependence on the measurement result.

11. Device for recovering linear polyesters, such as PET and PBT, from polyester waste of the most varied form, having a degasifying extruder (2) for melting the waste and for extracting volatile constituents, a first filter unit (3) for filtering the melt, a metering unit (5) for the metered addition of diol and if necessary additives to the melt, a static mixer (6) for mixing and homogenising the melt, a horizontally disposed postcondensation reactor (9) for further condensing the melt to a desired degree of polymerization and a pump (12) for extracting and conveying the melt to be further processed.

12. Device according to claim 11, **characterised in that** a device (1) for crushing, homogenising and compacting the waste is connected upstream of the degasifying extruder (2), which device generates the necessary force for charging the extruder.

13. Device according to claim 11 or claim 12, **characterised in that** a second filter unit (8) is provided in front of the postcondensation reactor (9).

14. Device according to one of claims 11 to 13, **characterised in that** the first filter unit (13) has a filtering size of between 40 and 150 µm and the second a filtering size of between 20 and 30 µm.

15. Device according to one of claims 11 to 14, **characterised in that** a metering unit (7) for metering the melt into the postcondensation reactor (9) is connected downstream of the static mixer (6).

16. Device according to one of claims 11 to 15, **characterised in that** a viscometer for measuring the intrinsic viscosity of the melt is disposed in front of the postcondensation reactor (9), the metering unit (5) for metering the diol and/or the vacuum of the degasifying extruder (2) being controlled in dependence on the measurement results.

17. Device according to one of claims 11 to 16, **characterised in that** the postcondensation reactor (9) is configured as a disc reactor with a rotor which carries discs set at an angle on a perforated hollow cylinder.

18. Device according to one of claims 11 to 17 , **characterised in that** a viscometer (11) for measuring the intrinsic viscosity of the melt emerging from the reactor (9) is connected downstream of the postcondensation reactor (9), the dwell time of the melt in the reactor (9) or the rotational speed of the rotor and/or the vacuum in the reactor (9) being controlled in dependence on the measured values.

## Revendications

1. Procédé pour la récupération de polyesters linéaires, comme le PET et le PBT, à partir de déchets de polyesters de formes très diverses, en mode continu, dans lequel le déchet non séché ou non entièrement séché est fondu, les chaînes polymères sont décomposées hydrolytiquement sous l'action de l'humidité qui y adhère, et dans lequel le diol correspondant au motif de base du polymère est ajouté au bain fondu, avec pour conséquence une décomposition glycolytique, et la masse fondue ainsi traitée est post-condensée jusqu'au degré de polymérisation désiré, le diol étant ajouté à la masse fondue de façon dosée en une quantité telle que le rapport des concentrations des groupes terminaux COOH/OH de la masse fondue avant la post-condensation soit compris entre 0,3 et 0,1 et la décomposition combinée hydrolytique et glycolytique étant pilotée en terme de degré de polymérisation avant la post-condensation à des valeurs comprises entre une limite inférieure de 15 et une limite supérieure de 35.

2. Procédé selon la revendication 1, **caractérisé en ce que** la masse fondue est filtrée avant et/ou après l'addition dosée du diol.

3. Procédé selon les revendications 1 ou 2, **caractérisé en ce que** l'on effectue une filtration grossière avec une largeur de filtre de 40 à 150 µm avant l'addition dosée de diol et une filtration fine avec une largeur de filtre de 20 à 30 µm avant la post-condensation.

4. Procédé selon l'une des revendications 1 à 3, **caractérisé en ce que** les déchets de polymères sont grossièrement pré-fragmentés et/ou compactés avant la fusion.

5. Procédé selon une des revendications 1 à 4, **caractérisé en ce que** les déchets sont lavés avant la fusion.

6. Procédé selon l'une des revendications 1 à 5, **caractérisé en ce que** des déchets de provenance les plus variées et pré-triés sont mélangés et traités.

7. Procédé selon l'une des revendications 1 à 6, **caractérisé en ce que** des additifs tels que des éclaircissants optiques, des colorants, des pigments colorés, des stabilisants ou des catalyseurs sont ajoutés à la masse fondue.

8. Procédé selon la revendication 7, **caractérisé en ce que** les additifs sont ajoutés avec le diol et les constituants sont mélangés à la masse fondue de façon homogène.

9. Procédé selon la revendication 7, **caractérisé en ce que** les additifs sont ajoutés en totalité ou en partie au cours de la fusion des déchets.

10. Procédé selon l'une des revendications 1 à 9, **caractérisé en ce que** la viscosité de la masse fondue est mesurée avant la post-condensation et l'addition dosée du diol et/ou la température et/ou le vide sont pilotés pendant la fusion en fonction du résultat de la mesure.

11. Dispositif pour la récupération de polyesters linéaires, comme le PET et le PBT, à partir de déchets de polyesters de formes les plus diverses, comprenant une extrudeuse à dégazage (2) destinée à faire fondre les déchets et à extraire les constituants volatiles, une première unité de filtration (3) destinée à filtrer la masse fondue, une unité de dosage (5) destinée à l'addition dosée du diol et éventuellement des additifs à la masse fondue, un mélangeur statique (6) destiné à mélanger et homogénéiser la masse fondue, un réacteur de post-condensation (9) disposé horizontalement, pour post-condenser la masse fondue jusqu'à un degré de polymérisation souhaité, et une pompe (12) destinée à extraire et transporter la masse fondue pour traitement ultérieur.

12. Dispositif selon la revendication 11, **caractérisé en ce qu'**en amont de l'extrudeuse à dégazage (2), est placé un dispositif (1) destiné à fragmenter, homogénéiser et compacter les déchets et qui, en même temps, produit la force nécessaire pour charger l'extrudeuse.

13. Dispositif selon la revendication 11 ou 12, **caractérisé en ce qu'**une deuxième unité de filtration (8) est prévue en amont du réacteur de post-condensation (9).

14. Dispositif selon l'une des revendications 11 à 13, **caractérisé en ce que** la première unité de filtration (3) présente une granulométrie de filtration de 40 à 150 µm et la deuxième une granulométrie de filtration de 20 à 30 µm.

15. Dispositif selon l'une des revendications 11 à 14, **caractérisé en ce qu'**une unité doseuse (7) destinée à introduire la masse fondue dans le réacteur de post-condensation (9) d'une façon dosée est montée en aval du mélangeur statique (6).

16. Dispositif selon une des revendications 11 à 15, **caractérisé en ce qu'**en amont du réacteur de post-condensation (9), est disposé un viscosimètre pour mesurer la viscosité intrinsèque de la masse fondue, l'unité de dosage (5) destinée à l'addition dosée du diol et/ou le vide de l'extrudeuse à dégazage (2) étant pilotés en fonction du résultat de la mesure.

17. Dispositif selon l'une des revendications 11 à 16, **caractérisé en ce que** le réacteur de post-condensation (9) est constitué par un réacteur à disques comprenant un rotor qui porte des disques montés obliquement sur un cylindre creux ajouré.

18. Dispositif selon l'une des revendications 11 à 17, **caractérisé en ce qu'**en aval du réacteur de post-condensation (9), est monté un viscosimètre (11) destiné à mesurer la viscosité intrinsèque de la masse fondue sortant du réacteur (9), le temps de séjour de la masse fondue dans le réacteur (9) ou la vitesse de rotation du rotor et/ou le vide dans le réacteur (9) étant pilotés en fonction des valeurs mesurées.
